# EUROPÄISCHE PATENTSCHRIFT

(11) **EP 2 419 200 B1**
(45) Veröffentlichungstag und Bekanntmachung des Hinweises auf die Patenterteilung: **28.08.2013**
(21) Anmeldenummer: 10715111.0
(22) Anmeldetag: 13.04.2010
(51) Int. Cl.: B01D 63/02

(54) **FILTERVORRICHTUNG MIT HETEROGEN VERTEILTEN HOHLFASERN UND VERFAHREN ZU DESSEN HERSTELLUNG**
FILTER DEVICE COMPRISING HETEROGENEOUSLY DISTRIBUTED HOLLOW FIBERS AND METHOD FOR THE PRODUCTION THEREOF
DISPOSITIF DE FILTRATION COMPORTANT DES FIBRES CREUSES À RÉPARTITION HÉTÉROGÈNE, ET PROCÉDÉ POUR SA FABRICATION

(30) Priorität: 14.04.2009 DE 102009017413
(43) Veröffentlichungstag der Anmeldung: 22.02.2012
(73) Patentinhaber: Fresenius Medical Care Deutschland GmbH, 61352 Bad Homburg (DE)
(72) Erfinder: MAURER, Matthias, 66649 Oberthal (DE)
(74) Vertreter: Herrmann, Uwe
(86) Internationale Anmeldenummer: PCT/EP2010/002275
(87) Internationale Veröffentlichungsnummer: WO 2010/118854

(56) Entgegenhaltungen:
- EP-A1- 0 046 015
- EP-A1- 1 201 293
- WO-A1-91/04758
- JP-A- 2007 216 175

## Beschreibung

Die vorliegende Erfindung betrifft eine Filtervorrichtung mit einem zylinderförmigen Gehäuse und einer Vielzahl von Hohlfasern, wobei die Hohlfasern zu einem Bündel im Gehäuse zusammengefasst sind und jeweils endseitig in einer Vergussmasse eingebettet und gehalten sind. Des Weiteren betrifft die Erfindung ein Verfahren zur Herstellung einer Filtervorrichtung, sowie eine Dialysemaschine mit einer Filtervorrichtung.

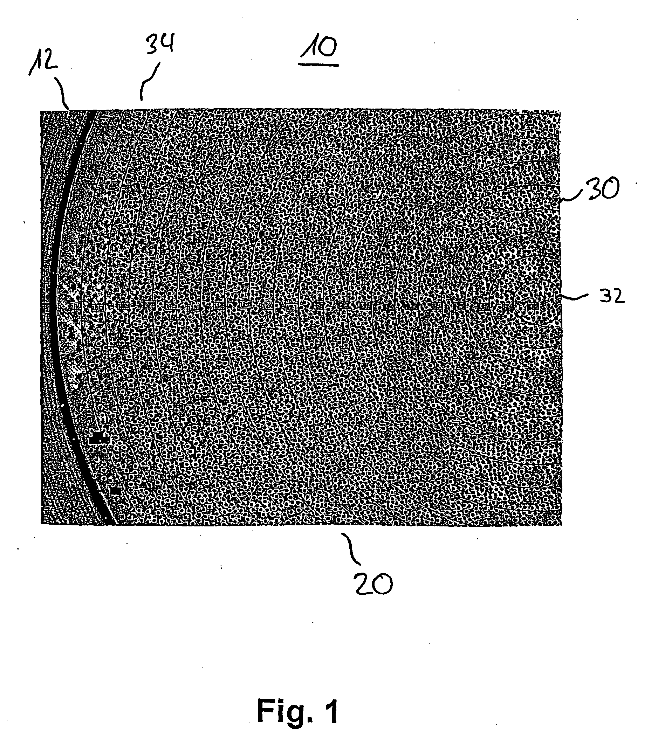

Auswertungen von Vergussschnitten senkrecht zur Längsrichtung von Dialysatoren ergaben, dass die Hohlfasern randomisiert und radial nicht gleichmäßig im Gehäuse des Dialysators verteilt sind (vgl. Fig. 1). Insbesondere in den Randzonen konnte eine Abnahme der Faserdichte festgestellt werden. Diese geringe Faserdichte im Randbereich ist offenbar eine Folge des "Bündelaufspringens" nach dem Einformen des Hohlfaserbündels in das Gehäuse. Dabei wird offensichtlich die Packungsdichte der Hohlfasermembranen im Inneren des Bündels beibehalten, während es zu einer Entspannung und damit zu einer Abnahme der Packungsdichte im Randbereich kommt.

Durch die reduzierte Faserdichte im Randbereich herrscht dort ein anderer Strömungswiderstand vor, so dass die Dialysatströmung nicht gleichmäßig über den gesamten Querschnitt senkrecht zur Längsrichtung des Dialysator verteilt ist.

Wünschenswert für eine optimale Ausreizung der Leistungsdaten eines Dialysators ist jedoch eine gute Umströmung aller Hohlfasermembranen und eine homogene Strömungsverteilung des Dialysats.

In Bezug auf vorbestimmte Substanzen kann die Qualität eines Dialysators anhand der Clearance bemessen werden. Die Clearance ist definiert als das Blutvolumen, das pro Zeiteinheit von einem bestimmten gelösten Stoff, z. B. Harnstoff, gereinigt wird. Die Clearance eines Dialysators ist dabei abhängig von den Flussraten der Flüssigkeitsströme im extrakorporalen Blutkreislauf, der Membranoberfläche, der Konzentration des gelösten Stoffes im Blut, dem Ausmaß von konvektivem und diffusivem Transport über die semipermeablen Membranen, der Porosität und Porengröße der Membran und weiteren Faktoren.

Entscheidend für eine Clearanceverbesserung, die durch den Transmembrandruck verursacht wird, ist eine gute Umströmung der blutführenden Hohlfasermembranen mit Dialysat. In der dicht gepackten Anordnung eines Faserbündels in einem Dialysatorgehäuse ist eine gute Anströmung der Fasern aber nicht homogen möglich.

Die Faserdichte eines Faserbündels in einem Gehäuse ist ortsabhängig und resultiert in unterschiedlichen vom Ort abhängigen Filtrationsleistungen der Fasern. In dicht gepackte Zonen des Faserbündels kann eine Anströmung mit Dialysat nicht optimal erfolgen. In zu locker gepackten Zonen stehen für eine gute Filtration möglicherweise zu wenige Fasern zur Verfügung.

Aus dem Stand der Technik sind bereits Lösungsansätze für das vorgenannte Problem der ungleichmäßig verteilten Hohlfasermembranen eines Dialysators bekannt.

Die US 5,584,997 beschreibt beispielsweise das Problem ungleichmäßig bzw. randomisiert angeordneter Hohlfasermembranen und die dadurch möglicherweise auftretende ungleichmäßige Dialysatanströmung der Hohlfasermembranen. Zur Lösung wird vorgeschlagen, die Hohlfasermembranen zu zwei übereinanderliegenden Matten anzuordnen und diese gemeinsame Matte spiralförmig aufzurollen, um eine gleichmäßige Verteilung der Hohlfasermembranen zu erreichen. Neben der Tatsache, dass dieses Verfahren aufwendig ist, kann eine gleichmäßige Verteilung nur näherungsweise erreicht werden. Denn der Abstand der Fasern in der Mattenebene wird bereits bei der Herstellung der Matte festgelegt und führt beim Aufrollen zu Ungleichmäßigkeiten wie Stauchungen oder Dehnungen. Auch Lücken an den jeweiligen Mattenenden können beim aufgerollten Faserbündel auftreten, etwa an den jeweiligen Enden der aufgerollten Matte.

Die EP 1 714 692 A1 betrifft einen Dialysefilter, bei dem das Hohlfasermembranbündel verdrillt und gestaucht in ein zylindrisches Filtergehäuse eingepasst wird. In den Bündeln entstehen hierdurch in Längsrichtung des Dialysators Zonen mit unterschiedlicher Faserdichte. Dabei soll das Hohlfaserbündel im Einströmbereich des die Hohlfasern umgebenden Fluidraumes eine niedrigere Packungsdichte aufweisen als im anschließenden Mittelbereich des Dialysators.

Die JP 2003159325 betrifft einen Dialysator und ein Verfahren zu seiner Herstellung. Dabei wird das Faserbündel des Dialysators entlang seiner Längsachse zwischen drei Rollen gedreht, um ein Verkleben oder Aneinanderhaften der Membranen zu verhindern. Zudem soll gegebenenfalls ein aufzutragender Beschichtungsfilm gleichmäßig auf alle Hohlfasernmembranen und nicht nur auch die äußeren Hohlfasermembranen aufgetragen werden können.

Die JP 2006297222 betrifft ein Verfahren zur Herstellung eines Hohlfaserbündels für einen Dialysator sowie eine Herstellungsvorrichtung für eine Dialysator. Vergleichbar der JP 2003159325 wird hier ebenfalls ein Hohlfaserbündel um seine Längsachse zwischen drei Rollen gedreht, um ein Verkleben oder Aneinanderhaften der Membranen zu verhindern. Zugleich soll eine gleichmäßige Benetzung aller Fasern des Bündels mit einem Beschichtungsfilm ermöglicht werden.

Die EP 1 201 293 A1 offenbart eine Filtervorrichtung mit einem zylinderförmigen Gehäuse und einer Vielzahl von Hohlfasern, wobei die Hohlfasern zu einem Bündel im Gehäuse zusammengefasst sind und jeweils endseitig in einer Vergussmasse eingebettet und gehalten sind. Die verwendeten Hohlfasern weisen unterschiedliche Wandstärken und Innendurchmesser auf. Die Verteilung der Hohlfasern über den Querschnitt des Bündels ist inhomogen, wobei die inhomogene Verteilung durch eine Heissluftbehandlung erreicht wird.

Die EP 0 046 015 A1 offenbart ein Verfahren zur Einfassung der Enden eines Faserbündels eines Dialysators in die Vergussmassen. Das Faserbündel wird nach seiner Einfassung in die Vergussmassen rotiert.

Die WO 91/04758 A1 offenbart einen Blutoxygenator, der mehrere Kammern und darin angeordnete Hohlfaserbündel aufweist. Die Hohlfaserbündel verschiedener Kammern weisen unterschiedliche Packungsdichten auf.

Es ist daher die Aufgabe der vorliegenden Erfindung, eine Filtervorrichtung der eingangs genannten Art in vorteilhafter Weise weiterzubilden, insbesondere dahingehend, dass die Anströmung der Hohlfasermembranen in einer Filtervorrichtung verbessert wird, um die Leistungsfähigkeit der Filtervorrichtung zu erhöhen.

Diese Aufgabe wird erfindungsgemäß gelöst durch eine Filtervorrichtung mit den Merkmalen des Anspruchs 1. Danach ist vorgesehen, dass eine Filtervorrichtung mit einem zylinderförmigen Gehäuse und einer Vielzahl von Hohlfasern ausgeführt ist, wobei die Hohlfasern zu einem Bündel im Gehäuse zusammengefasst sind und jeweils endseitig in einer Vergussmasse eingebettet und gehalten sind. Weiter ist vorgesehen, dass die Packungsdichte der Hohlfasern bezogen auf die Querschnittsfläche der Filtervorrichtung rotationssymmetrisch und ausgehend von der Längsachse des Gehäuses in radialer Richtung nach aussen hin konzentrisch homogen zunimmt.

Eine konzentrisch homogene Verteilung ist gegeben, wenn die radiale Verteilung rotationssymmetrisch ist. Hierdurch kann vorteilhafterweise vermieden werden, dass in den Randbereichen Stellen mit abweichender Faserdichte auftreten. Besonders vorteilhaft ist, dass keine konstruktive Veränderung an den geläufigen Filtervorrichtungen und keine zusätzlichen Bauteile notwendig sind.

Die Homogenisierung bzw. die Vermeidung von Inhomogenitäten in der radialen Verteilung der Hohlfasern kann nunmehr beispielsweise durch einen ergänzenden entsprechenden Homogenisierungsschritt bei der Herstellung der Filtervorrichtung erreicht werden, so dass die radiale Ausrichtung der Hohlfasern homogenisiert ist.

Die Filtervorrichtung kann vorteilhafter Weise ein Dialysator sein. Bei Versuchen konnte festgestellt werden, dass die Leistungsdaten des Dialysators durch die Homogenisierung verbessert werden konnte. Dies wurde beispielsweise anhand der Clearance für Natrium-Ionen oder Vitamin B12 überprüft.

Es ist erfindungsgemäß ferner vorgesehen, dass die Hohlfasern in longitudinaler Richtung parallel zueinander angeordnet sind. Beispielsweise ist in diesem Zusammenhang denkbar, dass die radiale Anordnung des Hohlfaserbündels durch eines Rotation um die Längsachse und die dabei auftretende Fliehkraft in einem rohrartigen oder zylindrischen Gefäß herbeigeführt wurde und sodann z. B. durch die Vergussmasse fixiert wurde. Durch die Fliehkraft können die Hohlfasern vorteilhaft in einem Zylinder oder Rohr gleichmäßig rotationssymmetrisch verteilt oder angeordnet werden.

Gemäß der Erfindung sind die Hohlfasern in radialer Richtung nach außen konzentrisch homogen dichter gepackt angeordnet. Dadurch ergibt sich der Vorteil, dass das Einströmen des Dialysat ins Bündelinnere verbessert wird, so dass die in der Regel im Bündelinneren befindlichen und gut z. B. mit Blut durchströmten Hohlfasern verbessert umströmt werden. Dadurch wird z. B. der Stoffaustausch vom Blut ins Dialysat verbessert, so dass die Leistungsdaten des Dialysators insgesamt verbessert werden. Insgesamt kann die Dialysatverteilung hierdurch verbessert werden.

Eine erfindungsgemäße Filtervorrichtung ist beispielsweise dadruch herstellbar, dass das Gehäuse mit dem darin eingebrachten und noch nicht vergossenen Bündel an Hohlfasern bei der Herstellung zur homogenen konzentrischen Anordnung der Hohlfasern um die Längsachse rotiert bzw. zentrifugiert wurde. Dadurch ergibt sich der Vorteil, dass die Rotation erhaltene Anordnung bereits an das Gehäuse angepasst und einfach fixiert werden kann.

Des Weiteren ist es möglich, dass das Gehäuse ein Gehäuse für den fliegenden Verguss der Hohlfasern ist.

Außerdem ist denkbar, dass die mittlere Packungsdichte der Hohlfasern zwischen 700-1300 Fasern/cm², vorzugsweise 800-1200 Fasern/cm², besonders bevorzugt zwischen 850-1150 Fasern/cm² liegt und/oder dass im Zentrum des Bündels ein im Vergleich zum übrigen Querschnitt faserärmerer Bereich mit einer Packungsdichte von ca. 500 Fasern/cm² vorgesehen ist.

Darüber hinaus betrifft die Erfindung ein Verfahren zur Herstellung einer erfindungsgemäßen Filtervorrichtung mit den Merkmalen des Anspruchs 6. Danach ist vorgesehen, dass in einem Verfahren zur Herstellung der Filtervorrichtung eine Vielzahl von Hohlfasern zu einem Bündel zusammengefasst, in ein Gehäuse eingeformt und jeweils endseitig in einer Vergussmasse eingebettet und gehalten werden. Dabei ist weiter vorgesehen, dass das Gehäuse nach dem Einformen des Hohlfaserbündels und vor dessen endseitigem Einbetten und Halten in den Vergussmassen um dessen Längsachse rotiert wird. Hierdurch ergibt sich der Vorteil, dass durch eine einfache und wenig zeitintensive Ergänzung des Herstellungsverfahrens die Leistungsdaten einer Filtervorrichtung verbessert werden können. Zudem lässt sich einfach eine homogene konzentrische Verteilung der Hohlfasern in radialer Richtung einstellen.

Vorteilhafterweise kann vorgesehen sein, dass das Gehäuse mit einer Rotationsgeschwindigkeit von bis zu 20000 U/min, vorzugsweise mit einer Rotationsgeschwindigkeit von 300-15000 U/min, besonders bevorzugt mit einer Rotationsgeschwindigkeit von 3000-9000 U/min rotiert wird.

Es ist weiter denkbar, dass bis zu 60 Sekunden, vorzugsweise 5-30 Sekunden, besonders bevorzugt 5-10 Sekunden oder 25-35 Sekunden rotiert bzw. zentrifugiert wird.

Bevorzugt wird es, wenn für die Anordnung der Hohlfasern mit einer in radialer Richtung konzentrisch homogen zunehmenden Packungsdichte ca. 25-35 Sekunden, vorzugsweise 30 Sekunden, zentrifugiert wird. Eine vorteilhafte Rotationsgeschwindigkeit kann dabei beispielsweise 7500 U/min sein.

Außerdem betrifft die vorliegende Erfindung eine Dialysemaschine mit den Merkmalen des Anspruchs 13. Danach ist vorgesehen, dass eine Dialysemaschine eine Filtervorrichtung gemäß einem der Ansprüche 1 bis 5 aufweist. Als besonders vorteilhaft erweist sich, dass mit einem derartigen Dialysegeräte eine verbesserte Dialysebehandlung durchführbar ist und dass die Leistungsdaten des Dialysator, insbesondere die erzielbare Clearance, verbessert sind.

Weitere Einzelheiten und Vorteile sollen nun anhand eines in der Zeichnung dargestellten Ausführungsbeispiels näher erläutert werden. Es zeigen:
- Fig. 1:: eine Aufnahme eines Schnittes durch den Vergussbereich einer bekannten Filtervorrichtung,
- Fig. 2:: eine Aufnahme eines Schnittes durch den Vergussbereich einer erfindungsgemäßen Filtervorrichtung und
- Fig. 3:: eine perspektivische Ansicht einer Rotationsvorrichtung für die Herstellung einer Filtervorrichtung.

Fig. 1 zeigt eine Schnittaufnahme durch den Vergussbereich 20 einer bekannten Filtervorrichtung 10 bzw. bekannten Dialysators 10. Deutlich erkennbar ist, dass in den Randzonen 34, also den Zonen, die an die Gehäusewandung angrenzen, die Packungsdichte der Hohlfasern 30 abnimmt. Die Hohlfasern 30 sind dabei als semipermeable Hohlfasermembranen 30 ausgeführt. Im äußersten Randbereich 34 beträgt dabei die Faserdichte ca. 600 Fasern/cm², steigt dann in Richtung Zentrum 32 auf ca. 1000 Fasern/cm² an und erreicht im Bereich von ca. ¼ des Radius um das Zentrum 32 eine Faserdichte von ca. 1200 Fasern/cm².

Der beobachtete Effekt ist mit dem Effekt des "Bündelaufspringens" erklärbar. Beim Einbringen des Bündels in das zylindrische bzw. rohrförmige Gehäuse 12 des Dialysators 10 entspannt sich das Bündel der Hohlfasermembranen 30 vornehmlich in den äußeren Randbereichen 34, während die Packungsdichte im Inneren bzw. um das Zentrum 32 hoch bleibt.

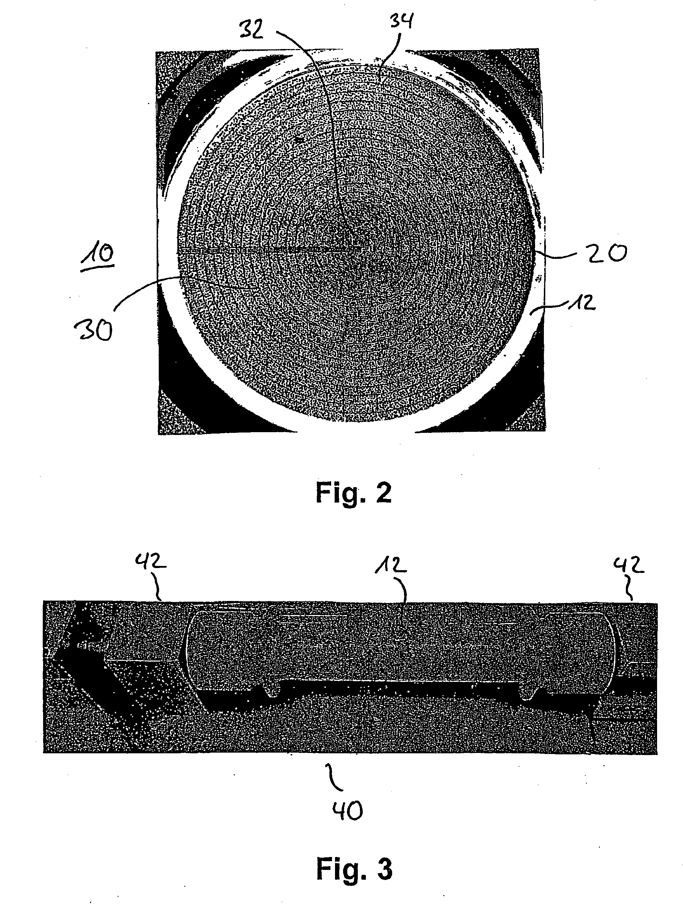

Fig. 2 zeigt eine Schnittaufnahme durch den Vergussbereich 20 einer erfindungsgemäßen Filtervorrichtung 10 bzw. Dialysators 10. Dabei wurde bei der Herstellung des Dialysators 10 vor dem Vergießen der Enden des Hohlfasermembranbündels 30 das in das Gehäuse 12 bereits eingeformte, nicht vergossene Hohlfasermembranbündel 30 zentrifugiert. Weitere Unterschiede, etwa durch weitere Komponenten im Vergleich zum in Fig. 1 gezeigten Dialysator bestehen nicht.

Der Herstellungsschritt der Zentrifugation kann dabei grundsätzlich folgendermaßen ablaufen:

Hierzu wird das eingeformte Hohlfasermembranbündel 30 in ein Gehäuse 12 für den sogenannten fliegenden Verguss eingeformt und vor bzw. nach dem Lasern der Produktionskette entnommen. Sodann wird das Gehäuse 12 mit dem eingeformten, unvergossenen Hohlfaserbündel 30 in eine Rotationsvorrichtung 40 (siehe Fig. 3) eingebracht und mit Drehzahlen z. B. zwischen 4000-7500 U/min für 5-30 Sekunden um die Längsachse des Gehäuses 12 rotiert. Sofort im Anschluß daran werden die eingeformten Bündel 30 dann wieder in den normalen Produktionsablauf eingebracht, gelasert und vergossen. Die Sterilisation der Filter erfolgt zeitnah auf benachbarten Sterilisationsvorrichtungen bzw. -stationen in dem gleichen Rundläufer.

In Fig. 2 zeigt das Schnittbild die Anordnung der Hohlfasermembranen 30 im Vergussbereich 20 nach einer Zentrifugation mit 7500 U/min für 30 Sekunden. Deutlich erkennbar ist, dass das Zentrum 32 deutlich faserärmer ist und die Packungsdichte homogen konzentrisch in radialer Richtung nach außen zur Randzone 34 zunimmt. Die sich durch die Zentrifugation ergebende Faserverteilung kann, wie das in Fig. 2 gezeigte Schnittbild durch die Vergussmasse 20 beweist, nachhaltig fixiert werden.

Im Zentrum 32 stellt sich somit eine Faserdichte von bis zu 500 Fasern/cm² ein, während sich ab etwa 1/3 des Radius nach außen eine Packungsdichte von ca. 1100 Fasern/cm² einstellt. Die in Fig. 2 gezeigte Faserverteilung ist insbesondere deshalb vorteilhaft, hierdurch das Einströmen des Dialysats in Bündelinnere gefördert und die Dialysatverteilung gleichmäßiger wird.

Fig. 3 zeigt in perspektivischer Darstellung eine Rotationsvorrichtung 40 für die Herstellung einer Filtervorrichtung 10, mit der Gehäuse 12 mit dem eingeformten und noch nicht vergossenen Hohlfaserbündel 30 zentrifugiert wird. Dazu wird das Gehäuse 12 jeweils endseitig in zwei Aufnahmen 42 der Rotationsvorrichtung 40 eingespannt und sodann zentrifugiert.

Die Rotationsvorrichtung 40 ist in der Lage, das Gehäuse 12, in dem beispielsweise ein Faserbündel mit ca. 14500 bis 16500 Hohlfasermembranen eingeformt ist, in einem allgemeinen Bereich mit einer Rotationsgeschwindigkeit von 0-20000 U/min bzw. 0-333 U/s zu rotieren. Die Winkelbeschleunigung liegt dabei in einem Bereich zwischen 1-300/s² und nach einer Anlaufzeit von einer Sekunde soll die Rotationsgeschwindigkeit zwischen 60-18000 U/min liegen.

In einem günstigen Bereich soll die Rotationsvorrichtung das Gehäuse mit einer Rotationsgeschwindigkeit von 300-15000 U/min bzw. 5-250 U/s zu rotieren. Die Winkelbeschleunigung liegt dabei in einem Bereich zwischen 10-150/s² und nach einer Anlaufzeit von einer Sekunde soll die Rotationsgeschwindigkeit zwischen 600-9000 U/min liegen.

In einem durch Versuche als besonders günstig identifiziertem Bereich soll die Rotationsvorrichtung das Gehäuse mit einer Rotationsgeschwindigkeit von 3000-9000 U/min bzw. 50-150 U/s zu rotieren. Die Winkelbeschleunigung liegt dabei in einem Bereich zwischen 20-80/s² und nach einer Anlaufzeit von einer Sekunde soll die Rotationsgeschwindigkeit zwischen 1200-4800 U/min liegen.

Bei einem kleineren Gehäuse 12 kann grundsätzlich vorgesehen sein, höhere Parameter zu wählen. Alternativ zur Winkelbeschleunigung kann als Kenngröße auch das Drehmoment vorgegeben werden, da bei bekanntem Trägheitsmoment der Faser und des Gehäuses die Winkelbeschleunigung proportional zum Drehmoment ist.

Grundsätzlich kann vorgesehen sein, dass die Rotations- bzw. Zentrifugationsparameter in einer Steuerung- und/oder Regelungseinheit der Rotationsvorrichtung 40 hinterlegt sind, so dass Rotations- bzw. Zentrifugationsschritt automatisiert ablaufen kann.

## Patentansprüche

1. Filtervorrichtung (10) mit einem zylinderförmigen Gehäuse (12) und einer Vielzahl von Hohlfasern (30), wobei die Hohlfasern (30) zu einem Bündel im Gehäuse (12) zusammengefasst sind und jeweils . endseitig in einer Vergussmasse (20) eingebettet und gehalten sind,
**dadurch gekennzeichnet,**
**dass** die Packungsdichte der Hohlfasern (30) bezogen auf die Querschnittsfläche der Filtervorrichtung (10) rotationssymmetrisch ist und ausgehend von der Längsachse des Gehäuses (12) in radialer Richtung nach außen hin konzentrisch homogen zunimmt, wobei die Hohlfasern (30) in longitudinaler Richtung parallel zueinander angeordnet sind.

2. Filtervorrichtung (10) nach Anspruch 1, **dadurch gekennzeichnet, dass** die mittlere Packungsdichte der Hohlfasern (30) bezogen auf die Querschnittsfläche der Filtervorrichtung (10) zwischen 700 und 1300 Fasern/cm² liegt.

3. Filtervorrichtung (10) nach einem der vorhergehenden Ansprüche, **dadurch gekennzeichnet, dass** die mittlere Packungsdichte der Hohifasern (30) bezogen auf die Querschnittsfläche der Filtervorrichtung (10) zwischen 800 und 1200 Fasern/cm² liegt.

4. Filtervorrichtung (10) nach einem der vorhergehenden Ansprüche, **dadurch gekennzeichnet, dass** die mittlere Packungsdichte der Hohlfasern (30) bezogen auf die Querschnittsfläche der Filtervorrichtung (10) zwischen 850 und 1150 Fasern/cm² liegt.

5. Filtervorrichtung (10) nach einem der vorhergehenden Ansprüche, **dadurch gekennzeichnet, dass** im Zentrum des Bündels ein im Vergleich zum übrigen Querschnitt faserärmerer Bereich mit einer Packungsdichte von bis zu 500 Fasern/cm² vorgesehen ist.

6. Verfahren zur Herstellung einer Filtervorrichtung (10) nach einem der vorhergehenden Ansprüche, wobei eine Vielzahl von Hohlfasern (30) zu einem Bündel zusammengefasst, in ein Gehäuse (12) eingeformt und jeweils endseitig in einer Vergussmasse (20) eingebettet und gehalten werden,
**dadurch gekennzeichnet,**
**dass** das Gehäuse (12) nach dem Einformen des Hohlfaserbündels und vor dessen endseitigem Einbetten und Halten in den Vergussmassen (20) um dessen Längsachse rotiert wird.

7. Verfahren nach Anspruch 6, **dadurch gekennzeichnet, dass** das Gehäuse (12) mit bis zu 20000 U/min rotiert wird.

8. Verfahren nach Anspruch 7, **dadurch gekennzeichnet, dass** das Gehäuse (12) mit zwischen 300 und 15,000 U/min rotiert wird.

9. Verfahren nach Anspruch 8, **dadurch gekennzeichnet, dass** das Gehäuse (12) mit zwischen 3,000 und 9,000 U/min rotiert wird.

10. Verfahren nach einem der Ansprüche 6 bis 9, **dadurch gekennzeichnet, dass** das Gehäuse (12) bis zu 60 Sekunden lang rotiert wird.

11. Verfahren nach Anspruch 10, **dadurch gekennzeichnet, dass** das Gehäuse (12) zwischen 5 und 30 Sekunden lang, vorzugsweise zwischen 5 und 10 Sekunden lang rotiert wird.

12. Verfahren nach Anspruch 10, **dadurch gekennzeichnet, dass** das Gehäuse (12) zwischen 25 und 35 Sekunden lang rotiert wird.

13. Dialysemaschine mit einer Filtervorrichtung (10) gemäß einem der Ansprüche 1 bis 5.

## Claims

1. A filter apparatus (10) having a cylindrical housing (12) and a plurality of hollow fibers (30), wherein the hollow fibers (30) are combined to form a bundle in the housing (12) and are imbedded and held in each case at the end sides in a molding compound (20),
**characterized in that**
the packing density of the hollow fibers (30) with respect to the cross-sectional area of the filter apparatus (10) is rotationally symmetric and is increasingly concentrically homogeneous in a radial direction towards the outside starting from the longitudinal axis of the housing (12), with the hollow fibers (30) being arranged parallel to each other in the longitudinal direction.

2. A filter apparatus (10) in accordance with claim 1, **characterized in that** the average package density of the hollow fibers (30) is between 700 - 1,300 fibers/cm² with respect to the cross-sectional area of the filter apparatus (10).

3. A filter apparatus (10) in accordance with one of the preceding claims, **characterized in that** the average package density of the hollow fibers (30) is between 800 - 1,200 fibers/cm² with respect to the cross-sectional area of the filter apparatus (10).

4. A filter apparatus (10) in accordance with one of the preceding claims, **characterized in that** the average package density of the hollow fibers (30) is between 850 - 1,150 fibers/cm² with respect to the cross-sectional area of the filter apparatus (10).

5. A filter apparatus (10) in accordance with one of the preceding claims, **characterized in that** a zone of less fibers in comparison with the remaining cross-section is provided at the center of the bundle with a package density of up to 500 fibers/cm².

6. A method for the manufacture of a filter apparatus (10) in accordance with one of the preceding claims, wherein a plurality of hollow fibers (30) are combined to form a bundle, are shaped into a housing (12) and are embedded and held in each case at the end sides in a molding compound (20),
**characterized in that**
the housing (12) is rotated about its longitudinal direction after the shaping of the hollow fiber bundle into the housing and before its embedding and holding at the end sides in the molding compounds (20).

7. A method in accordance with claim 6, **characterized in that** the housing (12) is rotated at up to 20,000 r.p.m.

8. A method in accordance with claim 7, **characterized in that** the housing (12) is rotated at between 300 to 15,000 r.p.m.

9. A method in accordance with claim 8, **characterized in that** the housing (12) is rotated at between 3,000 to 9,000 r.p.m.

10. A method in accordance with either of claims 6 to 9, **characterized in that** the rotation of the housing (12) takes place for up to 60 seconds.

11. A method in accordance with claim 10, **characterized in that** the rotation of the housing (12) takes place for 5 - 30 seconds, preferably 5 - 10 seconds.

12. A method in accordance with claim 10, **characterized in that** the rotation of the housing (12) takes place for 25 - 35 seconds.

13. A dialysis machine having a filter apparatus (10) in accordance with one of the claims 1 to 5.

## Revendications

1. Dispositif de filtration (10) avec un boîtier (12) de forme cylindrique et une pluralité de fibres creuses (30), les fibres creuses (30) étant réunies en un faisceau dans le boîtier (12) et étant insérées et maintenues à chaque extrémité dans un composé d'enrobage (20),
**caractérisé en ce que**
la densité de tassement des fibres creuses (30) par rapport à la surface de la section droite du dispositif de filtration (10) est à symétrie de révolution et augmente de manière homogène et concentrique en partant de l'axe longitudinal du boîtier (12) dans la direction radiale vers l'extérieur, les fibres creuses (30) étant disposées dans la direction longitudinale parallèles les unes aux autres.

2. Dispositif de filtration (10) selon la revendication 1, **caractérisé en ce que** la densité de tassement moyenne des fibres creuses (30) par rapport à la surface de la section droite du dispositif de filtration (10) se situe entre 700 et 1300 fibres/cm².

3. Dispositif de filtration (10) selon l'une des revendications précédentes, **caractérisé en ce que** la densité de tassement moyenne des fibres creuses (30) par rapport à la surface de la section droite du dispositif de filtration (10) se situe entre 800 et 1200 fibres/cm².

4. Dispositif de filtration (10) selon l'une des revendications précédentes, **caractérisé en ce que** la densité de tassement moyenne des fibres creuses (30) par rapport à la surface de la section droite du dispositif de filtration (10) se situe entre 850 et 1150 fibres/cm².

5. Dispositif de filtration (10) selon l'une des revendications précédentes, **caractérisé en ce qu'**une zone plus pauvre en fibres par rapport au reste de la section droite avec une densité de tassement allant jusqu'à 500 fibres/cm² est prévue au centre du faisceau.

6. Procédé de fabrication d'un dispositif de filtration (10) selon l'une des revendications précédentes, une pluralité de fibres creuses (30) étant réunie en un faisceau, moulée dans un boîtier (12) et insérée et maintenue à chaque extrémité dans un composé d'enrobage (20),
**caractérisé en ce que**
le boîtier (12) est tourné autour de son axe longitudinal après le moulage du faisceau de fibres creuses et avant l'insertion et le maintien des extrémités de celui-ci dans les composés d'enrobage (20).

7. Procédé selon la revendication 6, **caractérisé en ce que** le boîtier (12) est tourné jusqu'à 20 000 tr/min.

8. Procédé selon la revendication 7, **caractérisé en ce que** le boîtier (12) est tourné entre 300 et 15 000 tr/min.

9. Procédé selon la revendication 8, **caractérisé en ce que** le boîtier (12) est tourné entre 3 000 et 9 000 tr/min.

10. Procédé selon l'une des revendications 6 à 9, **caractérisé en ce que** le boîtier (12) est tourné pendant jusqu'à 60 secondes.

11. Procédé selon la revendication 10, **caractérisé en ce que** le boîtier (12) est tourné pendant entre 5 et 30 secondes, de préférence entre 5 et 10 secondes.

12. Procédé selon la revendication 10, **caractérisé en ce que** le boîtier (12) est tourné pendant entre 25 et 35 secondes.

13. Machine de dialyse comprenant un dispositif de filtration (10) selon l'une des revendications 1 à 5.
